**Europäisches Patentamt**

**European Patent Office**

**Office européen des brevets**

(19)

(11) Veröffentlichungsnummer: **0 264 711 B1**

(12) **EUROPÄISCHE PATENTSCHRIFT**

(45) Veröffentlichungstag der Patentschrift: **07.08.91**

(51) Int. Cl.⁵: **A01B 1/06**

(21) Anmeldenummer: **87114603.1**

(22) Anmeldetag: **07.10.87**

(54) **Bodenbearbeitungsgerät.**

(30) Priorität: **11.10.86 DE 8627051 U**

(43) Veröffentlichungstag der Anmeldung:
**27.04.88 Patentblatt 88/17**

(45) Bekanntmachung des Hinweises auf die
Patenterteilung:
**07.08.91 Patentblatt 91/32**

(84) Benannte Vertragsstaaten:
**AT BE CH DE ES FR GB IT LI NL SE**

(56) Entgegenhaltungen:
**EP-A- 0 006 666      AU-B- 7 334 474**
**FR-A- 604 912        US-A- 1 924 002**
**US-A- 2 809 067      US-A- 2 855 668**
**US-A- 3 129 771      US-A- 3 602 542**
**US-A- 4 456 075**

(73) Patentinhaber: **Lorenz, Stephan**
**Im Brockfeld 14**
**W-5100 Aachen(DE)**

(72) Erfinder: **Lorenz, Friedrich, Dr.-Ing.**
**Hagerweg 3**
**W-8183 Rottach-Egern(DE)**

(74) Vertreter: **Hoefer, Theodor, Dipl.-Ing.**
**Kreuzstrasse 32**
**W-4800 Bielefeld 1(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf ein handbedientes Bodenbearbeitungsgerät mit einem Stiel, an dessen einem Ende ein Handgriff und an dessen anderem Ende ein Werkzeug mit mehreren, schraubenlinienförmig gekrümmten Zinken angeordnet ist, die mit radialem Abstand vom Stiel rund um diesen angeordnet sind.

Zur Erleichterung der Bodenbearbeitung sind darartige Geräte bekannt geworden, bei denen das Werkzeug aus mehreren, auf einem Kreisbogen (in radialem Abstand rund um den Stiel) nebeneinander angeordneten geraden Zinken besteht, die zueinander nach innen schräggestellt in den Boden eingreifen (US-A-3 602 542). Allen diesen bekannten Geräten gemeinsam ist aber die Eigenschaft, daß das Arbeiten mit ihnen sehr kraftaufwendig, die Auflockerung des Bodens, insbesondere bei schweren Böden, sowie das Vermischen der Bodenschichten mit aufgestreuten Torf- oder Düngemitteln nicht möglich ist, und daß die gleichzeitig mit der Bodenbearbeitung angestrebte Unkrautbeseitigung nur ungenügend durchgeführt werden kann.

Ebenso ist es aus US-A-1 924 002 bereits bekannt, die Zinken eines Bodenbearbeitungsgerätes schraubenlinienförmig zu krümmen, wobei sich die Zinken im stumpfen Winkel zueinander schneiden. Durch diese Ausbildung ist es zwar möglich, Unkraut mitsamt dem Wurzelballen aus der Erde herauszuheben, aber bei derartigen Zinken, die als Spiralen dazu gebildet sind, ist das Einbringen in den Boden schwer. Bei einer anderen Ausführung gemäß US-A-2 809 067 sind senkrechte Zinken in ihrem Fußteil abgewinkelt und damit zeigen sieebenfalls den Nachteil, daß sie schwer in die Erde einzubringen und auch schwer aus der Erde herauszuziehen sind.

Der Erfindung liegt die Aufgabe zugrunde, ein Bodenbearbeitungsgerät zu schaffen, welches eine tiefgründige Bodenauflockerung, eine gute Vermischung der Bodenschichten mit aufgestreuten Torf- oder Düngemitteln sowie eine leichte Unkrautbeseitigung unter weitgehender Vermeidung eines großen Kraftaufwandes ermöglicht.

Diese Aufgabe wird erfindungsgemäß bei einem handbedienten Bodenbearbeitungsgerät der vorgenannten Gattung dadurch gelöst, daß die Zinken prallel zueinander auf einem gedachten Zylinder verlaufen, der zum Stiel koaxial angeordnet ist, und daß die Zinken auf dem Umfang des gedachten Zylinders gleichmäßig verteilt sind, wobei die Zinken derart gekrümmt sind, daß die die Zinkenfußpunkte und Zinkenspitzen mit der Achse des Stieles verbindenden Linien einen Winkel von annähernd 90° bilden.

Das Werkzeug des neuen Gerätes kann durch relativ leichten Druck auf seinen Handgriff und gleichzeitiges Drehen an diesem mit seinen Zinken schraubenartig in den Boden eingebracht werden, wobei die Möglichkeit besteht, den Handdruck durch Fußdruck auf Verbindungsstücke der Zinken mit dem Stiel zu unterstützen. Anschließend kann das Werkzeug vertikal aus dem Boden herausgehoben werden, so daß das Erdreich in krümeliger Form zurückbleibt.

Dadurch, daß die Zinken auch parallel zueinander auf einem gedachten Zylinder verlaufen, folgt jeder Zinken beim Eindringen in das Erdreich dem durch seine Spitze gebildeten Loch, ohne daß hierbei neue Bodenschichten aufgerissen werden.

Weiterhin bilden bei einer derartigen Krümmung der Zinken, daß die Verbindungslinien der Zinkenfußpunkte und der Zinkenspitzen mit der Stielachse annähernd einen Winkel von 90° einschließen, diese Zinken dann sozusagen die Viertelwindung einer Schraubenlinie. Bei einer solchen Ausbildung ist die Handhabung des Gerätes besonders einfach, da eine Vierteldrehung mittels des Handgriffs leicht ausgeführt werden kann und die Zinken dann bereits in voller Tiefe in den Boden eingedrungen sind.

Grundsätzlich kann für das erfindungsgemäße Bodenbearbeitungsgerät ein Werkzeug verwendet werden, welches zwei oder beliebig viele Zinken mehr aufweist, die in gleichmäßigem oder ungleichmäßigem Abstand um den Stiel verteilt angeordnet sind. Besonders vorteilhaft ist es jedoch, wenn das Werkzeug wenigstens drei und höchstens fünf Zinken hat, die gleichmäßig um den Stiel verteilt angeordnet sind. Mit einer solchen Ausbildung wird die gestellte Aufgabe besonders gut gelöst, ohne daß das Gerät ein zu hohes Eigengewicht erhält.

Es ist auch möglich, die Zinken mit unterschiedlichem radialen Abstand vom Stiel anzuordnen. Die Bedienung wird jedoch erleichtert, wenn zumindest die Zinkenfüße sämtlich denselben Abstand vom Stiel haben.

In allen Fällen können die Zinken an einer Platte oder an einzelnen Stäben befestigt und Mittel zur lösbaren sowie verdrehungssicheren Verbindung der Platte oder Stäbe mit dem Stiel vorgesehen sein.

Der Handgriff des neuen Gerätes besteht gemäß einer bevorzugten Ausführungsform der Erfindung aus einer quer zum Stiel verlaufenden Stange, die beiderseits des Stiels vorzugsweise die gleiche Länge aufweist. Für die Handhabung des Gerätes kann es weiterhin vorteilhaft sein, wenn die Stange des Handgriffs längenveränderbar ausgebildet ist. Hierdurch kann einerseits bei schwer zu bearbeitenden Böden der Hebelarm vergrößert und damit der Kraftaufwand verringert werden, andererseits in dichten Pflanzungen der Handgriff verkürzt werden, um eine bessere Handhabung zwischen den Pflanzen, gegebenenfalls sogar mit einer Hand, zu ermöglichen. Um die Bedienung des Gerätes zu erleichtern, kann schließlich an den Enden der Stange des Handgriffs je eine weitere, vorzgusweis bogenförmige, bei lotrechtem Stiel in horizontaler Lage befindliche Stange vorgesehen sein.

Allerdings besteht auch die Möglichkeit, den Handgriff des neuen Gerätes in noch anderer Art auszubilden und zwar beispielsweise in Form eines den Stiel zentrisch umgebenden Rades oder Radsegments.

Anhand der in den Zeichnungen dargestellten Ausführungsbeispiele sei die Erfindung näher erläutert. In den Zeichnungen zeigen:

Fig.1     eine Seitenansicht des Gerätes mit verkürztem Stiel;

Fig.2     eine Ansicht von oben auf das Werkzeug des Gerätes gemäß Linie II-II der Fig.1;

Fig.3     eine Ansicht von unten auf den Handgriff des Gerätes gemäß Linie III-III der Fig.1;

Fig.4     eine Fig.2 entsprechende Ansicht einer anderen Ausführungsform des Werkzeuges des Gerätes;

Fig.5     eine Fig.3 entsprechende Ansicht einer anderen Ausführungsform des Handgriffs des Gerätes;

Fig.6     eine Teildarstellung der in Fig.5 von einem strichpunktierten Kreis umgebenen Teile der anderen Ausführungsform des Handgriffs;

Fig.7-16     weitere Ausführungsformen eines erfindungsgemäßen handbedienten Bodenbearbeitungsgerätes.

Das in den Zeichnungen dargestellte Bodenbearbeitungsgerät 10 hat einen Stiel 11, an dessen oberem Ende ein Handgriff 12 und an dessen unterem Ende ein Werkzeug 13 angeordnet ist. Dieses Werkzeug 13 weist vier Zinken 14a- 14d auf, die mit Abstand vom Stiel 11 rund um diesen angeordnet und spiralförmig oder schraubenlinienförmig um die Stielachse 11a verlaufend gekrümmt sind.

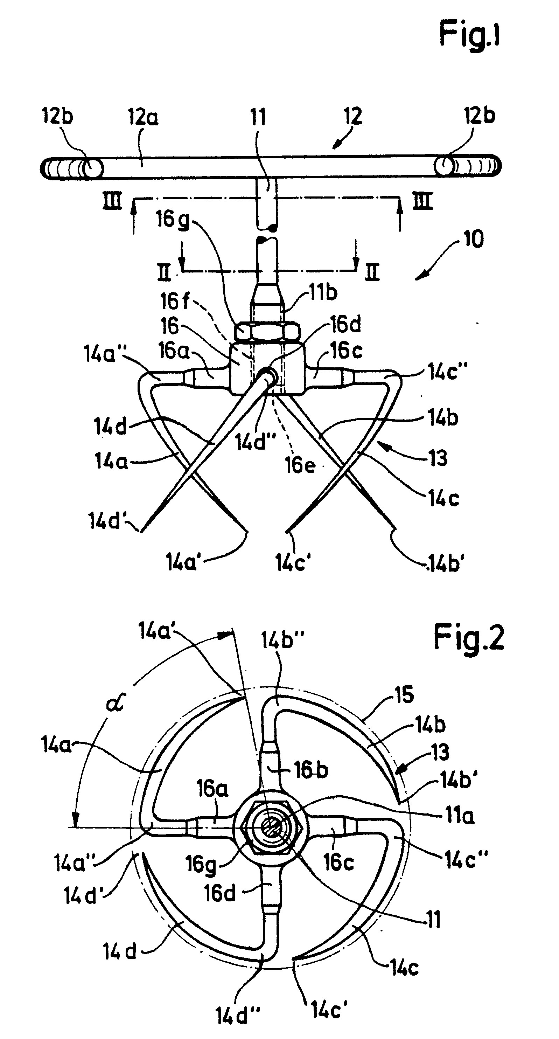

Bei der Ausführungsform des Werkzeugs 13 gemäß Fig.2 verlaufen die Zinken 14a-14d schraubenlinienförmig längs der Oberfläche eines gedachten Zylinders 15, der koaxial zum Stiel 11 angeordnet und durch einen strichpunktierten Kreis angedeutet ist.

Wie Fig.2 weiter zeigt, sind die Zinken 14a-14d derart gekrümmt, daß die Verbindungslinien der Zinkenfüße 14a''-14C'' und der Zinkenspitzen 14a'-14c' mit der Stielachse 11a einen Winkel $\alpha$ von annähernd 90° einschließen, was beispielsweise bezüglich des Zinkens 14a eingezeichnet ist. Dabei weisen sämtliche Zinkenfüße 14a''-14d'' denselben

Abstand von der Stielachse 11a auf.

Die Zinken 14a-14d selbst sind in dem dargestellten Ausführungsbeispiel mittels Stäben 16a-16d mit dem Stiel 11 lösbar verbunden, wozu die Stäbe an einem Verbindungsstück 16 befestigt sind, welches eine Innenbohrung 16e mit einem Gewinde 16f aufweist. Mittels des Gewindes 16f kann das Verbindungsstück 16 mit den Stäben 16a-16d und Zinken 14a-14d auf das ebenfalls mit einem Gewinde 11b versehene untere Ende des Stiels 11 aufgeschraubt werden. Zur Sicherung ist eine gleichfalls an dem unteren Stielende angeordnete Kontermutter 16g vorgesehen.

Wie bereits erwähnt, kann jedoch anstelle der vier Stäbe 16a-16d auch eine Platte verwendet werden, an deren Umfang die Zinken 14a-14d angeschweißt sind.

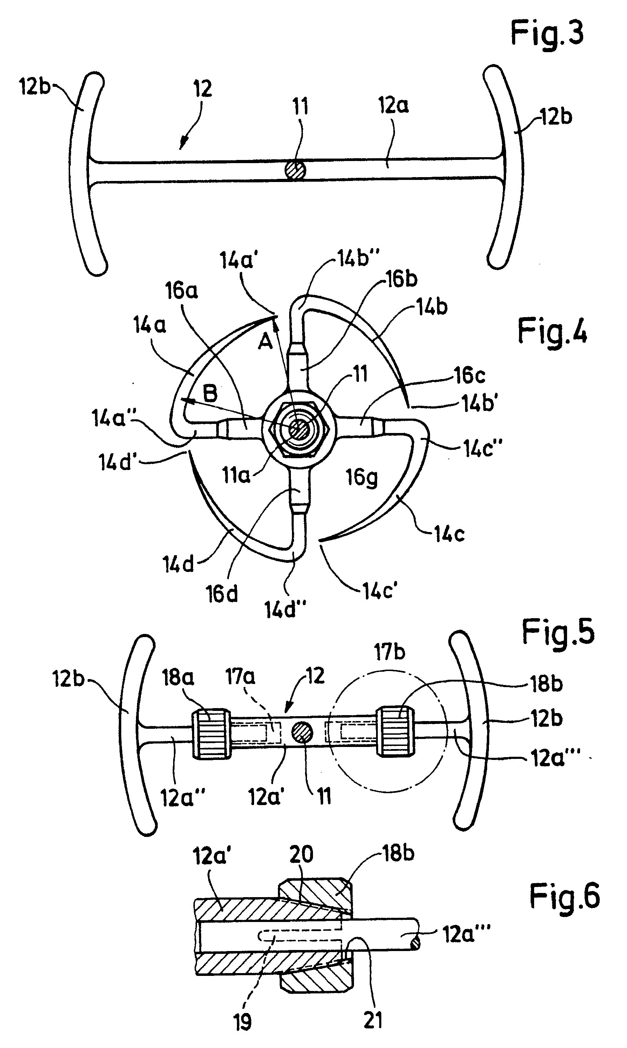

Der in den Fig.1 und 3 dargestellte Handgriff 12 besteht aus einer quer zum Stiel 11 verlaufenden Stange 12a, die beiderseits des Stiels 11 die gleiche Länge aufweist und an deren Enden je eine weitere bogenförmige, bei lotrechtem Stiel in horizontaler Lage befindliche Stange 12b angeordnet ist.

Bei der in Fig.4 dargestellten Ausführungsform des Werkzeugs 13 sind die Zinken 14a-14d derart gekrümmt, daß sie spiralförmig um die Stielachse 11a verlaufen und die Zinkenspitzen 14a'-14d' einen etwas kleineren Abstand A von dem Stiel 11 haben als die Zinkenfüße 14a''-14d'', deren Abstand von dem Stiel mit B bezeichnet ist.

Die Fig.5 und 6 zeigen eine Ausführungsform des Handgriffs 12, bei welcher dieser längenveränderbar ist. Dabei weist die Stange 12a eine Unterteilung in die Teile 12a', 12a'' und 12a''' auf. Der Stangenteil 12a' ist mit sich von seinen Enden zu seiner Mitte hin erstreckenden Bohrungen 17a und 17b versehen, welche zur teleskopartig verschieblichen Aufnahme der Stangenteile 12a'' und 12a''' und zur Befestigung derselben in der gewünschten Stellung dienen. Für die Befestigung der Stangenteile 12a'' und 12a''' sind weiterhin Kontermuttern 18a und 18b vorgesehen. Ferner weisen die Enden des Stangenteils 12a' hierzu je zwei gegenüberliegende Längsschlitze 19 auf.

Der Stangenteil 12a' ist an seinen Enden weiterhin mit einem konischen Außengewinde 20 versehen, auf welches die mit entsprechendem Innengewinde 21 ausgestatteten Kontermuttern 18a und 18b aufschraubbar sind. Durch ein derartiges Aufschrauben kann man die geschlitzten Enden des Stangenteils 12a' soweit zusammenpressen, daß hierdurch die in deren Bohrungen 17a und 17b befindlichen Stangenteile 12a'' und 12a''' in der gewünschten Stellung festgeklemmt werden.

Die Arbeitsweise des erfindungsgemäßen Gerätes ist derart, daß das Werkzeug 13 mit den Zinkenspitzen 14a'-14d' auf das zu bearbeitende Erdreich aufgesetzt wird und dann unter leichtem Druck auf den Handgriff 12 und gegebenenfalls leichtem Fußdruck auf einen der Stäbe 16a- 16b die Zinken 14a- 14d des Werkzeugs 13 mit einer bis zu etwa viertelkreisförmigen, schraubenartigen Bewegung in den Boden eingebracht werden. Zum Auflockern des Bodens wird sodann der Handgriff 12 ohne Druck oder mit etwas Zug geringfügig weitergedreht, als es für das Eindringen der Zinken 14a-14d in den Boden erforderlich ist. Anschließend kann das Werkzeug 13 des Gerätes vertikal aus dem Boden gehoben werden. In manchen Fällen läßt sich eine Auflockerung des Bodens allerdings auch schon dadurch erreichen, daß das Werkzeug 13 aus dem Boden gehoben wird, nachdem zuvor dessen Zinken 14a-14d um weniger als etwa einen Viertelkreis schraubenartig in den Boden eingebracht werden sind.

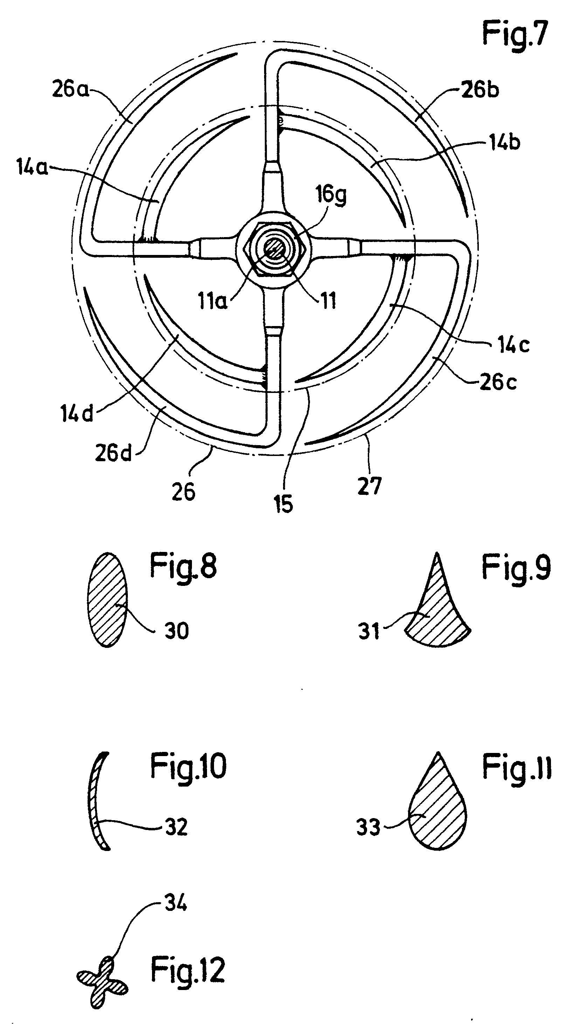

Bei dem in Fig.7 dargestellten Ausführungsbeispiel ist die Kreislinie, auf welcher die Zinken 14 in gleichem radialen Abstand von der Stielachse 11a angeordnet sind, von einem weiteren Kranz von Zinken 26 umgeben, die auf einer äußeren Kreislinie ebenfalls im gleichen radialen Abstand von der Stielachse 11a nach unten vorstehen und in gleicher Weise längs der Oberfläche eines gedachten Zylinders 27 verlaufen, der koaxial zum Stiel 11 angeordnet ist.

Der lichte Durchmesser des gedachten Zylinders 27 entspricht etwa dem 1,2 bis 1,7-fachen des gedachten inneren Zylinders 15.

Der volle Querschnitt der in den Fig.1 bis 8 dargestellten Zinken 14 und 26 ist vorzugsweise kreisrund. Demgegenüber können auch andere Querschnitte der Zinken in der Praxis vorteilhaft sein.

Es zeigen im Querschnitt:

Fig.8 eine ovale Querschnittsform 30 mit den schmaleren Stirnflächen in Eindrehrichtung:

Fig.9 eine pflugscharförmige Ausbildung 31;

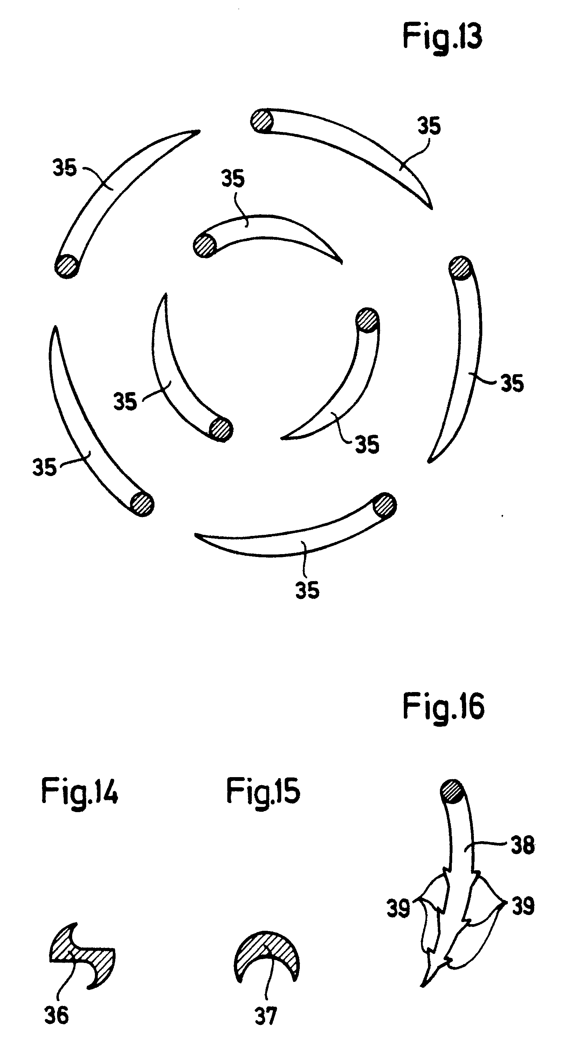

Fig.10 eine messerförmig etwa gebogene Ausbildung 32.

Die über die Länge des Zinkens sich erstreckende Spitzenlinie zeigt bei den Ausführungen in Bewegungsrichtung (Fig.9 und Fig.10).

Fig.11 eine tropfenförmige Ausbildung 33;

Fig.12 eine der Kreuzform ähnliche Ausbildung 34.

Die in Eindrehrichtung in Längsrichtung der Zinken vorstehenden Spitzenlinien jeder Querschnittsform können gegenüber der Achse der jeweiligen Zinke um 90°, 180° bis 360° verdrillt sein.

Fig.13 entspricht in der Grundform der Ausführung gemäß Fig.7 mit dem Unterschied, daß die in den beiden konzentrischen Kreislinien (Zylinderfläche) angeordneten gebogenen Zinken 35 in ihrer Länge und damit auch mit ihren Enden gegeneinander auf Lücke versetzt sind;

Fig.14 zeigt einen S-förmigen Querschnitt 36;

Fig.15 zeigt einen Halbmondquerschnitt 37. Bei der Ausführung gemäß

Fig.16 stehen an den Zinken 38 Widerhaken 39 paarweise vor.

Der Durchmesser eines Zinkens kann bevorzugt 6 - 10mm, vorzugsweise 8mm betragen, seine Spitze etwa 2 - 4mm. Die Länge eines Zinkens beträgt vorzugsweise 120 -150mm, vorzugsweise 130 - 140mm.

Die Vorteile des erfindungsgemäßen Gerätes bestehen einerseits darin, daß sämtliche Arbeiten zur Pflege des Bodens mit erheblich geringerem Kraftaufwand durchgeführt werden können als dies bei anderen Geräten erforderlich ist. Der Boden wird besonders feinkörnig aufgelockert, während bei den bisher bekannten Geräten häufig Erdschollen entstehen, die nachträglich aufgeschlagen werden müssen. Auch tiefwurzelnde Unkräuter können durch die tiefe Bodenauflockerung ohne Mühe aus dem Boden gezogen werden, wobei die Wurzeln dieser Unkräuter im Gegensatz zu der Bearbeitung mit Spaten und Hacke nur selten beschädigt werden, so daß die Unkräuter auch mit der gesamten Wurzel herausgezogen werden können. Wenn Torf oder Kunstdünger in den Boden eingearbeitet werden soll, wird mit dem ewrfindungsgemäßen Gerät ein gleichmäßiges Untermischen erreicht.

In besonderen Fällen kann es auch vorteilhaft sein, das Werkzeug des Gerätes nicht - wie vorbeschrieben --vertikal aus dem Boden herauszuheben, sondern den Stiel vorher etwas zu neigen und das Werkzeug dann entweder in dieser Richtung oder nach erneutem Aufrichten des Stieles herauszuziehen.

Das erfindungsgemäße Gerät kann auch mit Abwandlungen seiner in den Zeichnungen dargestellten Ausführungsbeispiele ausgeführt werden. Hierzu sei erwähnt, daß bei den dargestellten Ausführungsbeispielen der Stiel des Gerätes eine Länge aufweisen soll, wie sie beispielsweise bei normalen Spaten üblich ist, so daß mit dem Gerät stehend gearbeitet werden kann. Bei kleinen Anpflanzungen kann es jedoch wünschenswert sein, das Gerät mit einem kurzen Stiel zu versehen, um mit diesem in kniender, hockender oder gebückter Stellung arbeiten zu können. Außerdem ist es möglich, an dem Stiel Werkzeuge anzubringen, die hinsichtlich der Zahl der Zinken oder des Abstandes der Zinken vom Stiel den auszuführenden Arbeiten angepaßt sind. Durch die letztere Maßnahme kann zum Beispiel eine Anpassung des Gerätes an die Bodenbearbeitung zwischen Pflanzenreihen erfolgen. Ist verhältnismäßig lockerer Boden mit niedriger Bodenbepflanzung zu bearbeiten, so kann das Gerät auch mit verkürztem Stiel und Handgriff zur Bedienung mit einer Hand ausgeführt werden.

**Patentansprüche**

1. Handbedientes Bodenbearbeitungsgerät mit einem Stiel (11), an dessen einem Ende ein Handgriff (12) und an dessen anderem Ende ein Werkzeug mit mehreren, schraubenlinienförmig gekrümmten Zinken (14) angeordnet ist, die mit radialem Abstand vom Stiel (11) rund um diesen angeordnet sind, dadurch gekennzeichnet, daß die Zinken (14 a - 14 d) parallel zueinander auf einem gedachten Zylinder (15) verlaufen, der zum Stiel (11) koaxial angeordnet ist, und daß die Zinken (14 a - 14 d) auf dem Umfang des gedachten Zylinders (15) gleichmäßig verteilt sind, wobei die Zinken derart gekrümmt sind, daß die die Zinkenfußpunkte (14 a" - d") und Zinkenspitzen (14 a' - 14 d') mit der Achse des Stieles (11) verbindenden Linien einen Winkel von annähernd 90° bilden.

2. Handbedientes Bodenbearbeitungsgerät nach Anspruch 1, gekennzeichnet durch eine derartige Krümmung der Zinken (14 a - 14 d), daß deren Spitzen (14 a' - 14 d') einen kleineren Abstand (A) von dem Stiel (11) haben als deren Fußpunkte (14 a" - 14 d").

3. Handbedientes Bodenbearbeitungsgerät nach einem der Ansprüche 1 oder 2, dadurch gekennzeichnet, daß wenigstens drei und höchstens fünf Zinken (14 a ff) gleichmäßig auf einer Kreislinie (15, 26) um den Stiel (11) verteilt angeordnet sind.

4. Handbedientes Bodenbearbeitungsgerät nach den Ansprüchen 1 bis 3, dadurch gekennzeichnet, daß die Zinken (14 a ff) jeweils auf zwei oder mehr im Abstand voneinander angeordneten, konzentrischen Kreislinien (15, 26) um den Stiel (11) angeordnet sind.

5. Handbedientes Bodenbearbeitungsgerät nach einem der Ansprüche 1 bis 4, dadurch gekennzeichnet, daß zumindest die Zinkenfüße (14 a" - 14 d") auf derselben Kreislinie (15, 26) sämtlich denselben Abstand (B) vom Stiel (11) haben.

6. Handbedientes Bodenbearbeitungsgerät nach einem der Ansprüche 1 bis 5, dadurch gekennzeichnet, daß die Zinken (14 a - 14 d) an Stäben (16 a - 16 d) befestigt und Mittel (16) zur lösbaren sowie verdrehungssicheren Verbindung der Stäbe mit dem Stiel (11) vorgesehen sind.

7. Handbedientes Bodenbearbeitungsgerät nach einem der Ansprüche 1 bis 6, dadurch gekennzeichnet, daß der Stiel (11) längenveränderbar ausgebildet ist.

8. Handbedientes Bodenbearbeitungsgerät nach einem der Ansprüche 1 bis 7, dadurch gekennzeichnet, daß der Handgriff (12) aus einer quer zum Stiel (11) verlaufenden Stange (12 a bzw. 12 a', 12 a", 12 a''') mit beiderseits des Stiels (11) vorzugsweise gleicher Länge besteht oder in Form eines den Stiel (11) zentrisch umgebenden Rades oder Radsegmentes ausgebildet ist.

9. Handbedientes Bodenbearbeitungsgerät nach Anspruch 8, dadurch gekennzeichnet, daß bei einem von einer Stange gebildeten Handgriff (12) die Stange (12 a', 12 a", 12 a''') längenveränderbar ausgebildet ist.

10. Handbedientes Bodenbearbeitungsgerät nach einem der Ansprüche 8 oder 9, dadurch gekennzeichnet, daß bei einem von einer Stange gebildeten Handgriff (12) an den Enden der Stange (12 a bzw. 12 a', 12 a", 12 a''') je eine weitere, vorzugsweise bogenförmige, bei lotrechtem Stiel in horizontaler Lage befindliche Stange (12 b) vorgesehen ist.

11. Handbedientes Bodenbearbeitungsgerät nach den Ansprüchen 1 bis 10, dadurch gekennzeichnet, daß der Querschnitt der Zinken (14 a ff) kreisrund, oval, pflugscharförmig, messerförmig, tropfenförmig, kreuzförmig, spiralbohrerförmig ausgebildet ist.

**Claims**

1. A manual agricultural implement comprising a shaft (11), a handle (12) arranged on one end of said shaft and a tool arranged on the other end of said shaft and including a plurality of helically curved tines (14) disposed around said shaft (11) in radially spaced relationship therewith, characterized in that said tines (14 a - 14 d) extend parallel to each other along an imaginary cylinder (15) which is coaxial to said shaft (11), and that said tines (14 a - 14 d) are evenly distributed over the circumference of said imaginary cylinder (15) and curved such that the lines which connect the tine feet (14 a" - d") and tine tips (14 a' - 14 d') with the axis of said shaft (11) form an angle of approximatly 90°.

2. A manual agricultural implement as defined in claim 1, characterized by such a curvature of said tines (14 a - 14 d) that their tips (14 a' - 14 d') have a smaller distance (A) from said shaft (11) than their feet (14 a" - 14 d").

3. A manual agricultural implement as defined in any one of claim 1 or 2, characterized in that at least three and not more than five tines (14 a ff) are evenly arranged along a circular line (15, 27) around said shaft (11).

4. A manual agricultural implement as defined in claims 1 to 3, characterized in that said tines (14 a ff) are arranged along two or more spaced-apart concentric circular lines (15, 27) around said shaft (11).

5. A manual agricultural implement as defined in any of claims 1 to 4, characterized in that at least all of said tine feet (14a" - 14 d") along the same circular line (15, 27) have the same distance (B) from said shaft (11).

6. A manual agricultural implement as defined in any of claims 1 to 5, characterized in that said tines (14 a - 14 d) are secured to bars (16 a - 16 b) and means (16) are provided for the releasable and rotation-secured connection of said bars to said shaft (11).

7. A manual agricultural implement as defined in any of claims 1 to 6, characterized in that said shaft (11) is longitudinally adjustable.

8. A manual agricultural implement as defined in any of claims 1 to 7, characterized in that said handle (12) includes a rod (12 a and 12 a', 12 a", 12 a'", respectively) extending transversely to said shaft (11) at an equal length on both sides of said shaft (11) or is formed as a wheel or wheel segment which centrally surrounds said shaft (11).

9. A manual agricultural implement as defined in claim 8, characterized in that when said handle (12) is formed by a rod, said rod (12 a', 12 a", 12 a'") is longitudinally adjustable.

10. A manual agricultural implement as defined in any of claims 1 to 9, characterized in that when said handle (12) is formed by a rod, each end of said rod (12 a and 12 a', 12 a", 12 a'", respectively) is provided with another, preferably arcuate rod (12 b) which is in a horizontal position when said shaft is vertical.

11. A manual agricultural implement as defined in any of claims 1 to 10, characterized in that the cross-section of said tines (14 a ff) is circular, oval, plow-shaped, knife-like, drop-like, cross-like, or shaped like a twist drill.

**Revendications**

1. Appareil à main pour le travail du sol, comprenant un manche (11) a une extrémité duquel est disposée une poignée (12) et à l'autre extrémité duquel est disposé un outil muni de plusieurs dents (14) recourbées en forme d'hélice qui sont disposées tout autour du manche (11), à distance de celui-ci dans le sens radial, caractérisé par le fait que les dents (14a à 14d) s'étendent parallèlement entre elles sur un cylindre imaginaire (15) qui est disposé de manière coaxiale par rapport au manche (11) et par le fait que les dents (14a à 14d) sont régulièrement réparties sur le pourtour du cylindre imaginaire (15), les dents étant courbées de telle manière que les lignes qui relient les points de base (14a" à 14d") des dents aux pointes (14a' à 14d') des dents forment avec l'axe du manche (11) un angle approximativement égal à 90°.

2. Appareil à main pour le travail du sol selon la revendication 1, caractérisé par une courbure des dents (14a à 14d) qui est telle que leurs pointes (14a' à 14d') présentent par rapport au manche (11) une distance (A) plus faible que leurs points de base (14a" à 14d").

3. Appareil à main pour le travail du sol selon l'une des revendications 1 et 2, caractérisé par le fait qu'au moins trois dents (14a et suivantes), et au plus cinq, sont disposées autour du manche (11) en étant régulièrement réparties sur une ligne circulaire (15, 26).

4. Appareil à main pour le travail du sol selon les revendications 1 à 3, caractérisé par le fait que les dents (14a et suivantes) sont disposées à chaque fois autour du manche (11) sur deux lignes circulaires concentriques ou plus (15, 26) qui sont disposées à distance l'une de l'autre.

5. Appareil à main pour le travail du sol selon l'une des revendications 1 à 4, caractérisé par le fait qu'au moins les bases (14a" à 14d") des dents situées sur la même ligne circulaire (15, 26) présentent dans leur ensemble la même distance (B) par rapport au manche (11).

6. Appareil à main pour le travail du sol selon l'une des revendications 1 à 5, caractérisé par le fait que les dents (14a à 14d) sont fixées sur des tiges (16a à 16d) et qu'il est prévu des moyens (16) pour relier les tiges au manche (11) de manière amovible et solidaire en rotation.

7. Appareil à main pour le travail du sol selon l'une des revendications 1 à 6, caractérisé par le fait que le manche (11) est conformé de manière à pouvoir modifier sa longueur.

8. Appareil à main pour le travail du sol selon l'une des revendications 1 à 7, caractérisé par le fait que la poignée (12) est constituée par une tige (12a, et, respectivement, 12a', 12a", 12a''') qui s'étend transversalement par rapport au manche (11) et qui présente de préférence la même longueur des deux côtés du manche (11) ou qu'elle est réalisée sous la forme d'une roue ou d'un segment de roue qui entoure le manche (11) de manière centrée.

9. Appareil à main pour le travail du sol selon la revendication 6, caractérisé par le fait que, dans le cas où la poignée (12) est constituée par une tige, la tige (12a', 12a", 12a''') est réalisée de façon à pouvoir modifier sa longueur.

10. Appareil à main pour le travail du sol selon l'une des revendications 8 et 9, caractérisé par le fait que, dans le cas où la poignée (12) est constituée par une tige, il est prévu à chaque extrémité de la tige (12a, et, respectivement, 12a', 12a", 12a''') une autre tige (12b) de préférence en forme d'arc, qui se trouve en position horizontale lorsque le manche est vertical.

11. Appareil à main pour le travail du sol selon les revendications 1 à 10, caractérisé par le fait que la section transversale des dents (14a et suivantes) est conformée en cercle, en ovale, en forme de soc de charrue, en forme de couteau, en forme de goutte, en forme de croix ou en forme de foret hélicoïdal.

EP 0 264 711 B1

Fig.1

Fig.2

8

## Fig.3

## Fig.4

## Fig.5

## Fig.6

Fig.7

26a

14a

16g

11a 11

14d

26d

26

15

27

14b

26b

14c

26c

Fig.8

30

Fig.9

31

Fig.10

32

Fig.11

33

34

Fig.12

## Fig.13

35
35
35
35
35
35
35
35
35

## Fig.16

## Fig.14

## Fig.15

36

37

38

39    39